# EUROPEAN PATENT APPLICATION

(11) **EP 1 681 818 A1**
(43) Date of publication of application: **19.07.2006**
(21) Application number: 06290090.7
(22) Date of filing: 13.01.2006
(51) Int. Cl.: H04L 12/58, H04Q 7/28

(54) **Instant messaging client and server**

(30) Priority: 18.01.2005 US 644741 P
(71) Applicant: Nortel Networks Limited, St.Laurent, Quebec H4S 2A9 (CA)
(72) Inventor: Lescuyer, Pierre, 78180 Montigny Le Bretonneux (FR); Lucidarme, Thierry, 78180 Montigny Le Bretonneux (FR)
(74) Representative: Attali, Pascal

(57) **Abstract**

Instant messaging client (3;20) capable of taking part in a group of instant messaging clients (1-5;18-20) arranged for, when in communication mode, exchanging information with the other instant messaging clients of the group through an instant messaging server (6;28-29) in a communication network (7). The instant messaging client comprises means for entering, staying in or leaving a silent mode in which it is registered to the instant messaging server but receives no information sent by the other instant messaging clients of the group.

## Description

The present invention relates to instant messaging.

Instant messaging is to be understood here in a wide meaning, i.e. as relating to any real time or near real time information exchanges within a pool of users. It thus covers point to multipoint data transfers, such as in the application AOL Instant Messenger™ proposed by America Online, but also point to multipoint vocal message transfers, such as in push-to-talk services.

Thus, one example of instant messaging application, hereafter noted IM (for "Instant Messaging"), is a communication service which allows the exchange of text and/or multimedia information in near real time on the public Internet among registered users. Today, such service is easily available to Internet users who enjoy an Internet access provided by an ISP ("Internet Service Provider"). Each IM user (instant messenger) defines and manages a list of users (so called "buddy list") who subscribed to the same IM service product or an IM product compatible so that messages can be exchanged.

Typical IM services provide a presence awareness feature through which a user can inform a set of users of its availability for listening to information received. In this way, a user is able to inform other users whenever he listens for instant messages.

The concept of presence has been developed so far as to include different status, each of which corresponding to a certain state or mode in which a user is for a certain period of time. The user can typically select, through an API ("Application Programming Interface"), a status among a set of predefined status, and the selected status is made available to the users of the buddy list.

Today's public Internet IM systems are designed to work at an applicative level of the network and are mostly transparent to the other layers (physical, transport, etc.). Often the cost of data exchanged by a user during an IM communication session is managed according to a flat rate type subscription, which makes it transparent to the user. However, most of today's available billing schemes, especially in wireless communication environment, will oblige a user to pay for any received data, since it uses network resources. The user will be billed for any received data, regardless of whether or not some of the received data is unwanted or unsolicited.

As mentioned above, an IM user typically has the possibility to join a socalled "buddy" group or list (also called "chat" group or list). In most cases, this is done via a registration process to an IM server. Such registration can be implemented with the Session Initiation Protocol (SIP) specified in the RFC 2543, published in March 1999 by the IETF ("Internet Engineering Task Force"). The user device contains a software client, which is adapted to initiate a SIP client registration to a SIP IM server, as a member of one of the "buddy groups" managed by the server.

The registration to the IM server can be automatic, i.e. an involuntary process from the user's point of view. This is commonly the case in wire-line environments. Each time the IM application is launched on a first user platform (for instance a standalone PC with an IM client connected to the Internet via a provider or a direct broadband connection, a handheld device with an IM client connected to the Internet via a wire-line connection such as an organizer or a PDA, etc.), said first user appears in the "buddy lists" of other already registered (online) users who have configured their IM client so as to include the first user in one of their buddy lists. The first user will thereafter receive information from said other already registered users.

This mechanism will therefore generate traffic and occupy network resources, even though said first user is not really interested in participating in an IM communication session with the other already registered users.

As mentioned above, this can be even more problematic when it occurs in IM systems or applications managed according to a subscription that provides a billing scheme based on the rating of exchanged data (in particular the ones for which any received data incurs a cost). Indeed, the user may not be ready to pay for receiving unsolicited and uncontrolled data, especially when it has not explicitly requested to participate to the IM communication session.

A possibility for the user to overcome this problem could be to stay offline, so as to ensure he will not receive unwanted data. But, in this case, it will be impossible to reach him even under special circumstances, which may pose other problems.

An object of the present invention is to overcome the above mentioned problems.

Another object is to allow a user of an instant messaging application not to receive unwanted information from other users, while still being reachable under particular circumstances.

The invention proposes an instant messaging client capable of taking part in a group of instant messaging clients arranged for, when in communication mode, exchanging information with the other instant messaging clients of the group through an instant messaging server in a communication network. The instant messaging client comprises means for entering, staying in or leaving a silent mode in which it is registered to the instant messaging server but receives no information sent by the other instant messaging clients of the group.

Thus, the instant messaging client (or its user) is not disturbed by information sent by the other instant messaging clients of the group. Moreover, it is still reachable due to the fact it is registered to the instant messaging server. The instant messaging server can initiate or forward an alert, in order to reach the instant messaging client and, possibly, to make it join the current instant messaging communication session with other instant messaging clients of the group.

Advantageously, the alert message received by the instant messaging client uses a Session Initiation Protocol (SIP). This may be particularly the case when the communication network comprises an IMS part.

The invention also proposes a device incorporating an instant messaging client as mentioned above, and comprising means for communicating with the communication network.

The instant messaging client may represent hardware or software part of the device.

The device may be a wireless communication device, such as a mobile radio equipment for instance.

The invention also proposes an instant messaging server capable of being placed in a communication network to manage information exchanges between instant messaging clients of a group. The instant messaging server comprises :
- means for memorizing status relating to a mode in which each instant messaging client of the group is, the mode being one among at least a communication mode in which said instant messaging client receives information sent by other instant messaging clients of the group and a silent mode in which said instant messaging client is registered to the instant messaging server but receives no information sent by the other instant messaging clients of the group ;
- means for forwarding information received from an instant messaging client of the group to the other instant messaging clients of the group for which a status relating to the communication mode is memorized ; and
- means for preventing information received from an instant messaging client of the group from being forwarded to the other instant messaging clients of the group for which a status relating to the silent mode is memorized.
   Advantageously, the instant messaging server comprises means for sending an alert message to an instant messaging client of the group for which the status relating to the silent mode is memorized, so that said instant messaging client can turn to the communication mode.
   The means for sending an alert message could be activated upon occurrence of an event, e.g. responsive to the reception of a request from at least one other instant messaging client of the group or responsive to a registration of at least one other instant messaging client of the group to the instant messaging server.
   The invention also proposes a communication network comprising an instant messaging server as mentioned above, to manage information exchanges between instant messaging clients of a group.
   The communication network may comprise an IP Multimedia System (IMS).
   It may also comprise wireless part for communicating with the wireless device of at least one of said instant messaging clients of the group.
   Instant messaging according to the invention can refer to any type of information exchanges between instant messaging clients of a group, such as vocal messages or messages containing data.
   The preferred features of the above aspects which are indicated by the dependent claims may be combined as appropriate, and may be combined with any of the above aspects of the invention, as would be apparent to a person skilled in the art.
- FIG.1 is a schematic view of a system including a group of instant messaging users, one of which being in a silent mode ;
- FIG.2 shows a first example of an alert mechanism of the user in silent mode in the system of FIG.1 ;
- FIG.3 shows a second example of an alert mechanism of the user in silent mode in the system of FIG.1 ;
- FIG.4 is a schematic architecture of a network in which the invention can take place.

The invention is illustrated hereafter in its application to a wireless network. As mentioned above indeed, wireless networks often use a billing scheme based on the rating of exchanged data, which make them of particular interest for implementing the present invention. However, it will be appreciated that the invention can also be applied to any other type of networks, such as wire-line networks, with any type of billing scheme. Mixed networks, e.g. networks with a fixed access and a radio access, can also implement the invention.

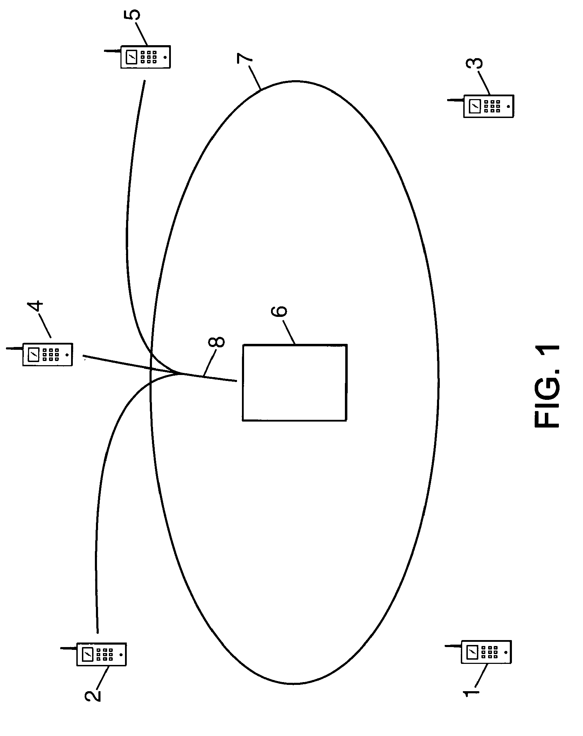

FIG.1 shows a network 7 including an instant messaging server 6 capable of managing information exchanges between instant messaging clients of users 1-5 forming a group. The information exchanges between the clients of different users are routed through the instant messaging server 6.

Each user holds a device incorporating the corresponding instant messaging client and having communication means for communicating with the network 7.

In the following, the instant messaging application considered relates to data (text and/or multimedia) exchanges and is noted IM. Of course, the invention can also apply to other types of instant messaging applications, such as applications relating to vocal message exchanges, as will be described later.

Moreover, for simplicity, although some operations relating to the IM service are carried out by IM clients, the latter will be often assimilated to the users they are associated with.

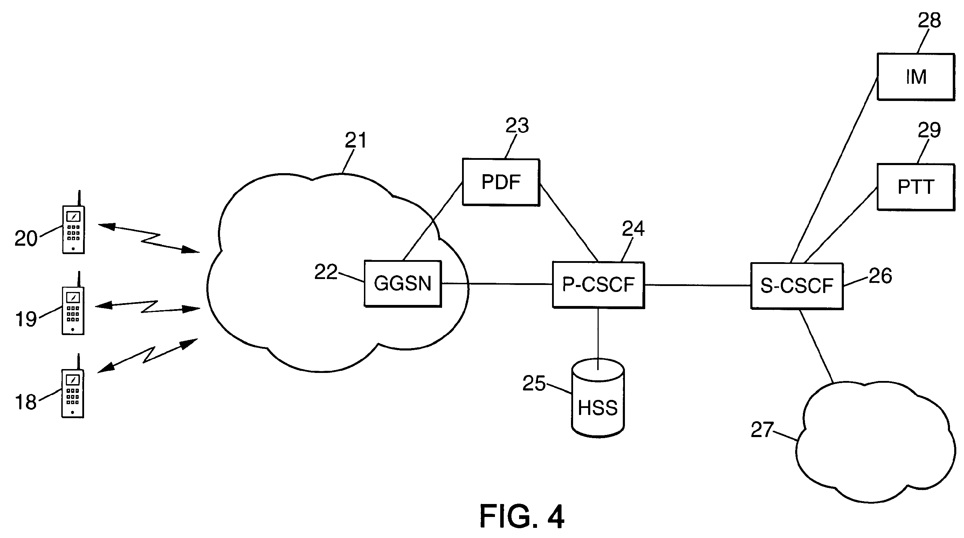

The network 7 of FIG.1 advantageously includes a wireless part for communicating with wireless devices of the users 1-5. This wireless part can comprise a GSM ("Global System for Mobile communications") / GPRS ("General Packet Radio Service") or UMTS ("Universal Mobile Telecommunication System") network for instance. Another example will be described below with reference to FIG.4.

The users (or their IM clients) 1-5 form a buddy list or group BL managed by the IM server 6. They may be in different modes. For example, the users 2, 4 and 5 are in a communication mode (online), which means that they receive all the information sent by the other users of the buddy list BL, through the IM server 6. The user 1 is in an offline mode, which means that he is not registered to the IM server 6, possibly with respect to the buddy list BL. The user 1 is thus unable to receive any information from any other user of the buddy list BL, through the IM server 6. In other words, the IM client of the user 1 is disconnected to the IM service.

It should be noted that these users could be in other modes. Typical other known modes for a user, in addition to the above mentioned communication mode and offline mode, are :
- Away : the user keeps on receiving information sent by the other users of the buddy list BL ; the other users are informed that said user is not available for reading and answering their messages for an undetermined period of time ;
- Out to lunch : the user keeps on receiving information sent by the other users of the buddy list BL ; the other users are informed that said user is not available for reading and answering their messages for about an hour ;
- Be right back : the user keeps on receiving information sent by the other users of the buddy list BL ; the other users are informed that said user is not available for reading and answering their messages for a short time ;
- On the phone : the user keeps on receiving information sent by the other users of the buddy list BL ; the other users are informed that said user is not available for answering their messages (but may read them) for the whole duration of the call ;
- Busy : the user keeps on receiving information sent by the other users of the buddy list BL, but is not interrupted by pop-up alerts or tones on his computer ; this mode is particularly adapted when the user is participating in a meeting for instance.

All these modes can be related to a particular buddy list, such as BL, which means e.g. that the IM client of user 1 can be offline with respect to the buddy list BL but in communication mode with respect to another buddy list it also belongs to. Alternatively, the IM client of a user can be in a single mode with respect to any buddy list it belongs to. In this case, the fact that the IM client of user 1 is offline means that it is totally disconnected to the IM server 6, with no possibility to receive any information from users of any buddy list.

As for the user 3, it is in a new mode defined by the present invention and called silent mode. In this silent mode, the user 3 does not receive any information from the other users 1-2 and 4-5 of the buddy list BL, but he is registered to the IM server 6. Therefore, although he does participate in the exchanges with the other users of the buddy list BL, he can be reached if needed through an alert mechanism which will be described later.

There are different reasons why the user 3 may be in silent mode. He can enter this mode by itself, e.g. because he does not wish to receive information from the other users, after a client inactivity timer has elapsed or on request of the IM server 6 or of another server for example.

Once, in silent mode, the user 3 may stay in this mode or leave it to turn to another mode.

The IM server 6 has a memory in which it stores a status relating to the mode in which each one of the users 1-5 (or their IM clients) is. The status are made available to all the users of the buddy list BL, so that each one can know that another user is in the communication, offline, busy or silent mode for instance. In this way, a user can adapt his behavior in function of the presence or absence of the other users.

All the information exchanged between the users 1-5 of the buddy list BL go through the IM server 6. The latter forwards the received information to the users according to their stored status.

In the example of FIG.1, the IM server 6 receives and forwards information only between the users 2, 4 and 5 which are in communication mode, as illustrated by the links 8. No information is forwarded to the offline user 1 or to the user 3 in silent mode. This filtering can be made after a check of the status of said users in the memory of the IM server 6.

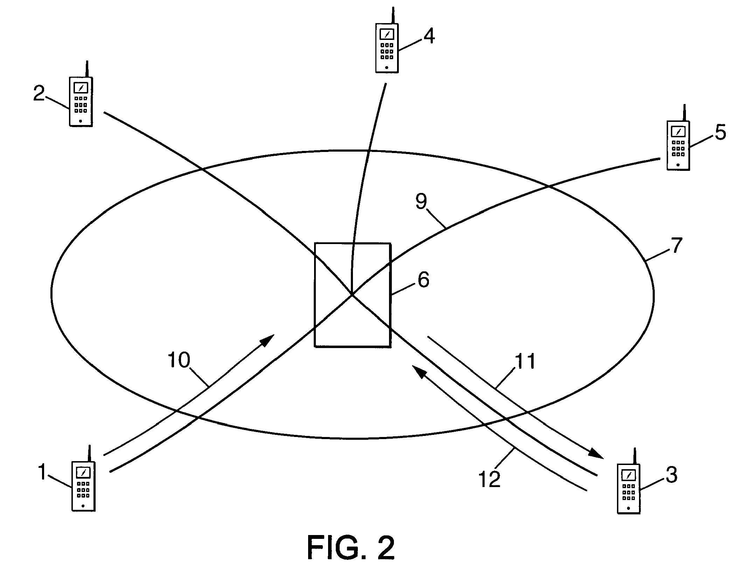

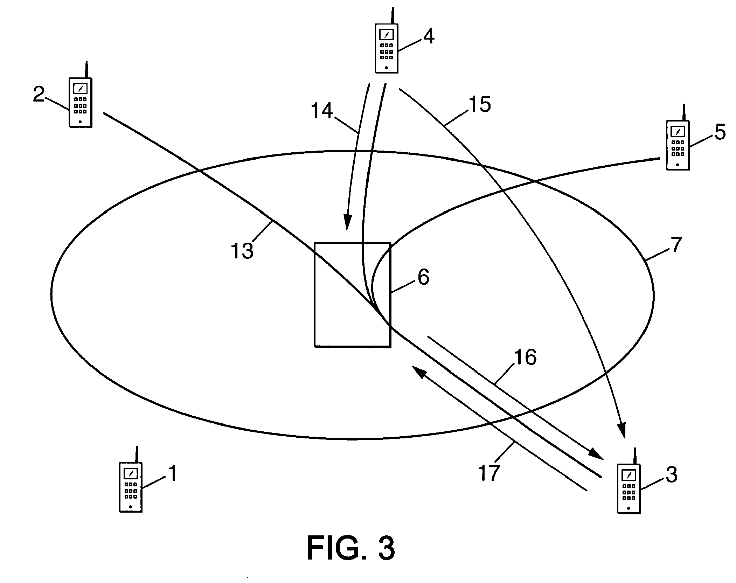

Since the user 3 is in silent mode, it can be reached if needed. This can be done upon occurrence of an event which can be predefined. FIGs 2 and 3 show two scenarios in which the user 3 is alerted so as to be able to join the IM communication session.

In the example of FIG.2, the user 1 who was offline initially then registers to the IM server 6, possibly with respect to the buddy list BL (registration message 10). On reception of the registration message 10, the IM server 6 updates its memory to change the status of user 1 from offline mode to communication mode and sends an alert message 11 to the user 3 to indicate that the user 1 has registered and is now in communication mode.

On reception of the alert message 11, the user 3 can decide whether or not he wants to join the IM communication session, possibly with respect to the buddy list BL, now that he knows that user 1 is online. If he decides to join the IM communication session and thus to turn to communication mode, he sends a joining message 12 to the IM server 6. This joining message can be similar to a registration message. The IM server 6 can then update its memory to change the status of user 3 from silent mode to communication mode. Afterwards, information can be exchanged between all the users 1-5 through the IM server 6, as illustrated by the links 9. The user 3 can also decide not to join the IM communication session and stay in silent mode.

Alternatively, the alert message 11 could automatically make the user 3 join the communication session with the other users of the buddy list BL. In this case, the IM server 6 could update its memory to change the status of user 3 from silent mode to communication mode, as soon as it receives the registration message 10 from user 1. No joining message 12 is needed in this case.

FIG.3 shows another scenario, in which the event triggering the alert is no more a registration but an explicit request to join the IM communication session. In this example, the user 4 who is in communication mode and knows that the user 3 is in silent mode, sends a message to the IM server 6 (request message 14), requesting that the user 3 joins the IM communication session. On reception of this message 14, the IM server 6 sends an alert to the user 3 accordingly (alert message 16). The alert message 16 can contain some information. For instance, it can indicate that the alert was requested by the user 4. It can also include some text, such as a description of the reason why the user 4 wants the user 3 to join the IM communication session.

Like in the example described with reference to FIG.2, the mode of the user 3 can be changed from silent mode to communication mode and updated in the IM server memory, either automatically on reception of the request message 14, or on reception by the IM server 6 of a joining message 17 from the user 3. Afterwards, all the users 2-5 can exchange instant messages, as illustrated by the links 13.

Advantageously, the alert mechanism is implemented by using SIP signalling. For instance, the request message 14 sent by the user 4 may be a SIP session creation message "SIP invite". The alert message 11 or 16 sent to the user 3 from the IM server 6 may also be a SIP session creation message "SIP invite". It can be noted that if the IM server 6 receives a request message, such as a "SIP invite" message, from a user to the attention of another user who is not in silent mode, it is capable of filtering it out. The joining message 12 or 17 returned by the user 3 may also be a SIP message.

Alternatively, the alert mechanism could be implemented in other ways. For instance, the user 4 could alert the user 3 through a direct message 15, i.e. a message which does not pass through the IM server 6. Such message 15 can be a SIP message or any other type of message adapted to the capabilities of the network 7 and of the device of the user 3. In case of a wireless network, the alert message 15 can be incorporated in a SMS ("Short Message Service") message for instance.

In what precedes, the invention has been described for an IM application relating to data (text and/or multimedia) exchanges. As mentioned above, it can also apply to other instant messaging applications. In particular, all the mechanisms described above can apply to push-to-talk (PTT) services, especially in wireless systems.

PTT users may also register to a group call service, in order to participate in a group call with a predefined group of other users. In such case, the registration can be done on a voluntary basis. That is, a PTT user who is a member of a predefined group of users for group calls may choose to register to said predefined group of users in order to participate to the corresponding group call. A PTT user might prefer not to register to said predefined group of users so as to avoid participating to the corresponding group call and avoid potential associated costs, while still being reachable in some way. Indeed, if the user chooses not to register simply to avoid costs associated with an active participation to the group call, this raises the issue of other users of said predefined group of users not knowing whether or not the user has registered.

The present invention provides a method to wake-up or alert the "PTT ready" users (that is, those who pay for the group call service but are in silent mode with regard to the ongoing group call). The wake-up or alert can be performed e.g. with a SMS message originated by any user of said predefined group of users, or a PTT server at the initiative of any user of said predefined group of users. Reception of the alert or wake-up message might produce the display on the paged PTT user's terminal of a question such as : "User X wants you to participate to group call N, Yes/No?". Responsive to a positive answer to the question, the PTT user's terminal might automatically leave the silent mode, participate to the group call and receive any data sent over the group.

FIG.4 shows an example of a network architecture in which the invention can take place.

This network comprises a wireless network 21 such as a UMTS network for instance, as well as IMS ("IP Multimedia System", where IP designates "Internet Protocol") elements.

IMS architecture and functions are described in the technical specification TS 23.228, version 5.14.0, Release 5, "Digital cellular telecommunications system (Phase 2+); Universal Mobile Telecommunications System (UMTS); IP Multimedia Subsystem (IMS); Stage 2", published in September 2005 by the 3GPP, and in the technical specification TS 24.228, version 5.13.0, Release 5, "Digital cellular telecommunications system (Phase 2+); Universal Mobile Telecommunications System (UMTS); Signalling flows for the IP multimedia call control based on Session Initiation Protocol (SIP) and Session Description Protocol (SDP); Stage 3", published in June 2005 by the 3GPP.

Such network is arranged for the provision of multimedia services. It can allow a mobile wireless network operator to offer its subscribers multimedia services based on and built upon Internet applications, services and protocols. The multimedia services provided can include instant messaging services.

As defined in the above mentioned specifications, the IMS network of FIG.4 thus includes a P-CSCF ("Proxy - Call Session Control Function") 24, which is connected to the gateway 22 of the UMTS network 21 called GGSN ("Gateway GPRS Support Node", where GPRS means "General Packet Radio Service"). The P-CSCF 24 is therefore the first contact point for the wireless terminals 18-20, called UEs ("User Equipments"), within the IMS network. It can send and receive SIP messages to or from the UEs 18-20.

The IMS network of FIG.4 further includes a S-CSCF ("Serving - Call Session Control Function") 26, connected to the P-CSCF 24, and which provides the session control services, i.e. which handles the session states, for the UEs 18-20. The P-CSCF 24 or the S-CSCF 26 can also play the role of an I-CSCF ("Interrogating - Call Session Control Function") as defined in the above mentioned specifications, thus providing a contact point within the operator's network. The I-CSCF generally deals with registration, routing and forwarding of SIP messages and charging.

The S-CSCF 26 can further be connected to application servers, e.g. an email server. In the example of FIG.4, the S-CSCF 26 is connected to an IM server 28 and a PTT server 29, in order to provide the UEs 18-20 with instant messaging services. The S-CSCF 26 is also connected to a network 27, which can be the PSTN ("Public Switched Telephone Network") for example.

Moreover, a PDF 19 ("Policy Decision Function") can manage the quality of service for the UEs 18-20 and an HSS ("Home Subscriber Server") 25 can be used as an extension of the HLR ("Home Location Register") usually part of the mobile wireless networks, to store subscribers' information.

After being registered to the S-CSCF 26, the UEs 18-20 can be provided with IP services and applications. In particular, they can use instant messaging applications, through the IM server 28, for text and/or multimedia exchanges, or through the PTT server 29, for vocal message exchanges.

The mechanisms described above can be implemented in the network of FIG.4. For example, the UEs 18-20 could compose a buddy list and could each include an instant messaging client operating in a given mode. For example, the client of the UEs 18-19 could be in communication mode, while the UE 20 could be in silent mode. The IM server 18 or the PTT server 19 could memorize corresponding status.

As explained above, although the UE 20 is not registered to the IM server 18 or the PTT server 19 initially (possibly with respect to the buddy list composed of the UEs 18-20), it could be alerted through the IM server 18 or the PTT server 19 via SIP signalling, so as to turn to the communication mode.

Of course, other network architectures could also suit for implementing the present invention as will be appreciated by one skilled in the art.

## Claims

1. An instant messaging client (3;20) capable of taking part in a group of instant messaging clients (1-5;18-20) arranged for, when in communication mode, exchanging information with the other instant messaging clients of the group through an instant messaging server (6;28-29) in a communication network (7), said instant messaging client comprising means for entering, staying in or leaving a silent mode in which it is registered to the instant messaging server but receives no information sent by the other instant messaging clients of the group.

2. An instant messaging client (3;20) as claimed in claim 1, comprising means for informing the instant messaging server (6;28-29) when it enters or leaves the silent mode.

3. An instant messaging client (3;20) as claimed in claim 1 or 2, comprising further means for, when in silent mode, receiving an alert message through the communication network (7).

4. An instant messaging client (3;20) as claimed in claim 3, wherein the alert message (11;14;16) is sent by the instant messaging server (6;28-29) or by at least one other instant messaging client of the group.

5. An instant messaging client (3;20) as claimed in claim 3 or 4, wherein the alert message (11;14;16) is sent by using a Session Initiation Protocol.

6. A device incorporating an instant messaging client (3;20) as claimed in any one of the preceding claims and comprising means for communicating with the communication network (7).

7. A device as claimed in claim 6, said device being a wireless communication device.

8. An instant messaging server (6;28-29) capable of being placed in a communication network to manage information exchanges between instant messaging clients (1-5;18-20) of a group, the instant messaging server comprising :
- means for memorizing status relating to a mode in which each instant messaging client of the group is, the mode being one among at least a communication mode in which said instant messaging client receives information sent by other instant messaging clients of the group and a silent mode in which said instant messaging client is registered to the instant messaging server but receives no information sent by the other instant messaging clients of the group ;
- means for forwarding information received from an instant messaging client (1-2;4-5;18-19) of the group to the other instant messaging clients of the group for which a status relating to the communication mode is memorized ; and
- means for preventing information received from an instant messaging client (3;20) of the group from being forwarded to the other instant messaging clients of the group for which a status relating to the silent mode is memorized.

9. An instant messaging server (6;28-29) as claimed in claim 8, comprising means for sending an alert message (11;16) to an instant messaging client (3;20) of the group for which the status relating to the silent mode is memorized, so that said instant messaging client can turn to the communication mode.

10. An instant messaging server (6;28-29) as claimed in claim 9, wherein the means for sending an alert message to an instant messaging client (3;20) of the group for which the status relating to the silent mode is memorized are activated upon occurrence of an event.

11. An instant messaging server (6;28-29) as claimed in claim 10, wherein the means for sending an alert message (16) to an instant messaging client (3;20) of the group for which the status relating to the silent mode is memorized are activated responsive to the reception of a request (14) from at least one other instant messaging client (4) of the group.

12. An instant messaging server (6;28-29) as claimed in claim 10, wherein the means for sending an alert message (11) to an instant messaging client (3;20) of the group for which the status relating to the silent mode is memorized are activated responsive to a registration (10) of at least one other instant messaging client (1) of the group to the instant messaging server.

13. An instant messaging server (6;28-29) as claimed in any one of claims 10 to 12, wherein the alert message (11;16) is sent by using a Session Initiation Protocol.

14. A communication network comprising an instant messaging server (6;28-29) as claimed in any one of claims 8 to 14 to manage information exchanges between instant messaging clients (1-5;18-20) of a group.

15. A communication network as claimed in claim 14, further comprising an IP Multimedia System (IMS) in which said instant messaging server (28-29) takes place.

16. A communication network as claimed in claim 14 or 15, further comprising a wireless part (21) for communicating with the wireless device of at least one of said instant messaging clients of the group.

17. A communication network as claimed in any one of claims 14 to 16, wherein at least some of the information exchanges relate to vocal messages.

18. A communication network as claimed in any one of claims 14 to 17, wherein at least some of the information exchanges relate to messages containing data.
